# NEW EUROPEAN PATENT SPECIFICATION

(11) **EP 0 599 293 B2**
(45) Date of publication and mention of the opposition decision: **31.05.2000**
(45) Mention of the grant of the patent: 20.08.1997
(21) Application number: 93118930.2
(22) Date of filing: 24.11.1993
(51) Int. Cl.: B60G 11/28, B60K 17/04

(54) **Axle assembly for vehicles**
Achse für Fahrzeuge
Essieu pour véhicules

(30) Priority: 27.11.1992 HU 374692
(43) Date of publication of application: 01.06.1994
(73) Proprietor: MAGYAR VAGON-ES GEPGYAR, H-9002 Györ (HU)
(72) Inventor: Szalai, Gábor, Dipl.-Ing., H-9002 Györujbarát (HU); Istok, Albert, H-9023 Györ (HU); Szij, Péter, Dipl.-Ing., H-9022 Györ (HU)
(74) Representative: Hansmann, Axel, Dipl.-Wirtsch.-Ing.

(56) References cited:
- EP-A- 0 341 634
- EP-A- 0 456 096
- DE-A- 2 552 192
- DE-A- 2 932 684
- DE-A- 3 027 806
- FR-A- 697 929
- FR-A- 843 176
- GB-A- 933 537
- US-A- 2 215 506
- US-A- 4 057 121
- O.W.O Schulz, Der Entwicklungsweg vom Omnibus zum "Stadtbus", Tetzlaff, Darmstadt, 1976

## Description

The invention relates to a driven axle assembly for vehicles which comprises a centre housing, suspension elements connecting the centre housing to the vehicle, a main drive arranged in the centre housing and including a differential gear unit, side drives arranged on outer ends of the centre housing, wheel hub units connected to the side drives, respectively, wherein a portal distance is provided between a middle axis of a differential gear unit arranged in the centre housing and a longitudinal axis of the wheel hub units. Such a driven axle assembly is known from DE-A-2932684.

Axle assemblies with this so called portal arrangement are more widely used nowadays to enhance public transport, to speed up the passenger traffic, to make the entry and exit easier in the case of motor busses. The outstanding advantage of the portal arrangement is in that the floor height of the vehicle can be as low as 320 to 350 mm measured from the ground level so there is only one step needed to step up from the pavement level. However, there are certain difficulties with driven rear axles of the vehicles since not only the required drives must find place, but the sufficient stability and rigidness must be provided and the connections to the vehicle frame must be stable enough as well.

In case of known axle assemblies (as it is described *inter alia* in DE-A-30 27 806), the main drive is put aside as far as possible from the longitudinal axis of the vehicle. Onto the differential being a part of main drive, a pair of bevel gear and disk gear is attached, wherefrom the revolution is led to the side drives. Thus, increase of the torque and reduction of numbers of rotation are carried out in two steps. The portal distance can be measured between the longitudinal axis of the differential arranged in the centre housing and the longitudinal axis of the outlet axle shafts, *i*. *e*. that of the hub units: this is the measure with which the floor level of the vehicle can be made lower in comparison to that of the vehicle with conventional axle assembly.

In the prior art proposals, the support and suspension elements are not parts of the axle assembly. In the conventional arrangements, for example, on each side 2 x 3 pieces that is altogether 12 pieces of massive connecting eyes are provided on housings of the side drives, and the choice, outline and attachment of these support and suspension elements are left over to the producer of the motor busses. The bus producers form these suspension elements in the rule as welded constructions made of more than one piece, these pieces are then fixed to each other as well as to the housings of the side drives and the frame of the vehicle by threaded connections. Onto this support system of beams screwed to each other, the air springs and the shock absorbers of the vehicle are attached, too.

In the praxis, it proves to be unfavourable *per se* that the support and suspension elements are constructed from more than one piece. At each and every threaded connection, the strength of the bearing construction is drastically reduced, and at the same time, the screwed connection is a stress collecting area. In known solutions, for example, four separate elements are screwed onto the axle assembly. It has been proven, as well, that even the most special threaded connections get inevitably loose from time to time, which is outmostly inconvenient in terms of safety of the conventional axle assemblies. At the screwed connections, the closed beams change to be an open one, and this further reduces the strength and stability of conventional suspension elements.

It cannot be let out of consideration that, as a result of what have been said above, the known support and suspension elements must be over-dimensioned and the sufficient stability must be provided at the screwed connections as well. This makes the assembly not only a more complicated one but the self weight of the axle assembly will be enlarged, too.

In the bus construction industry, the tendency can be observed most recently, according to which the bus producers are not willing to manufacture the support and suspension elements by themselves and it is inconvenient to procure them from outer suppliers. Thus, the still unsolved need is more and more urging that the producer of axle assemblies should provide their products as a complete construction having all fasteners, suspension elements mounted on them and, thus, being ready for installation.

The main objective of the present invention is to provide an axle assembly which fully satisfies the above mentioned needs of comprising all of the necessary fasteners and suspension elements in a compact construction and which, however preserves all benefits of the portal arrangement. A further object is to increase the safety of the known solutions and to make them simpler.

Hence, a driven axle assembly in accordance with the present invention is characterized by the features specified in the characterizing part of Claim 1.

The improvement is in that the suspension elements connecting the centre housing to the vehicle are attached to housings of the side drives in an one-piece manner, whereby housings of the side drives, the centre housing and said suspension elements are formed as a compact unit, and the suspension elements include substantially C-formed arms as well as connecting points for attaching the axle assembly to the vehicle.

Various optional or preferred features are set out in the dependant claims forming part of this specification.

It is also preferred, according to the invention, that when the suspension elements include substantially C-formed arms, they are made of closed profile and on ends of the arms lying away from the centre housing air spring pads and shock-absorber pads are arranged.

A further preferred embodiment is in which the centre housing and a housing of the main drive are made as a one-piece cast element.

Finally, it is also preferred that inner rings of bearings of transmission gears of the side drives, a distance ring arranged between the inner rings of the bearings and side walls of the side drives as well as a threaded bolt penetrating the side walls of the side drives and a threaded disk arranged on a threaded portion the bolt form parts of a pre-stressed system.

Embodiments of this invention will now be described by way of example with reference to the accompanying drawings in which
- ***Fig. 1***: illustrates a preferred embodiment of the axle assembly as in this invention: schematic view of a vehicle with axle assembly in portal arrangement;
- ***Fig. 2***: is a side elevational view of the embodiment in Fig. 1 seen from the input side;
- ***Fig. 3***: is a top view the embodiment in Fig. 1;
- ***Fig. 4***: shows a sectional view along line *IV*-*IV* in Fig. 3;
- ***Fig. 5***: shows a portion of the embodiment in Fig. 1: a section of the side drive taken in a plane running through the axis of the transmittal gear of the side drive.

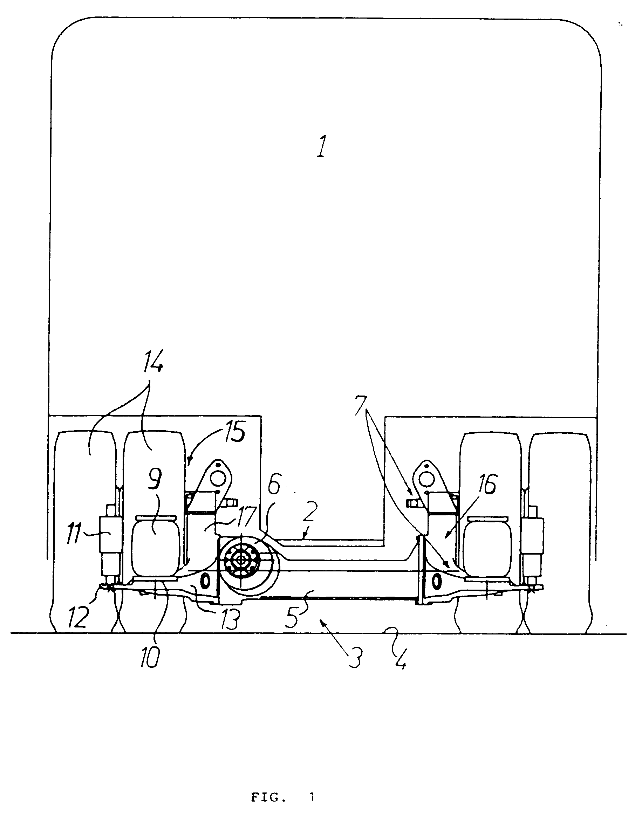

In Fig 1 of the exemplified embodiment, it can be well observed that a floor level 2 of a vehicle 1 is, in contrast to the conventional solutions, quite low, *i*. *e*. near to ground level 4, thanks to an axle assembly 3 in portal arrangement. For this, however, a centre housing 5 of axle assembly 3 must be very low and a housing 6 of the main drive of axle assembly 3 must be pushed aside as far as possible.

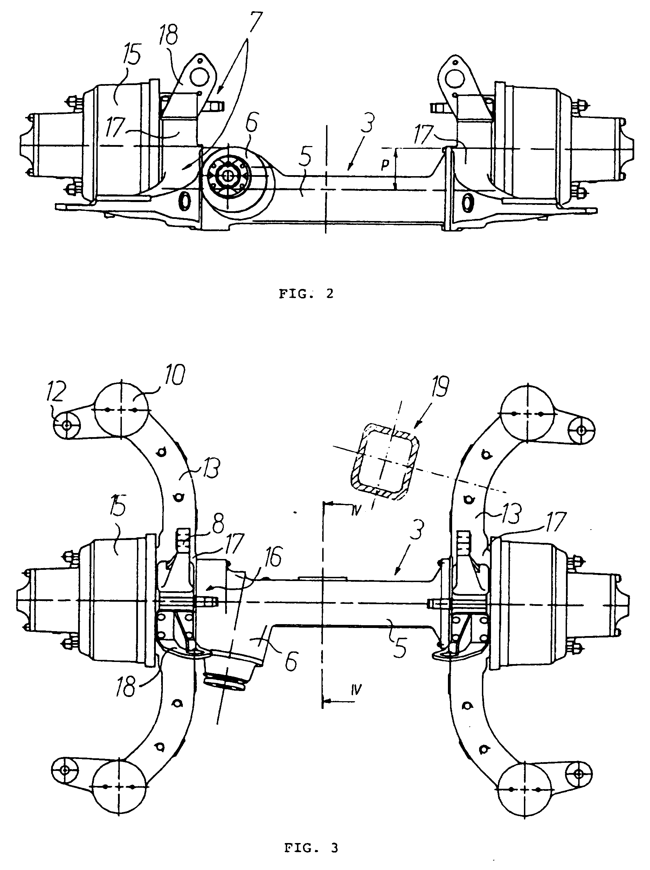

In the sense of the invention, integrated parts of the axle assembly 3 as improved in this invention are suspension elements 7. These comprise, on one hand, suspension blocks 8 (Fig. 3) for connections of the fasteners attaching the axle assembly 3 to the frame of vehicle 1 and, on the other hand, pads 10 supporting air springs 9 of vehicle 1 and pads 12 supporting shock-absorbers 11 of vehicle 1, as well as arms 13 (Fig. 3) integrated to housings 17 of side drives 16. Wheels 14 of vehicle 1 are arranged on hub units 15 being connected to housings 17 of side drives 16 at the extremities of centre housing 5.

In Figs. 2 to 4, the axle assembly 3 according to the invention is illustrated in dismounted position. In Fig. 2, hub units 15 attached to housing 17 of side drive 16 as well as main drive 6 pushed aside on centre housing 5 can be well observed. This figure shows, too that suspension elements 7 forming integral parts of axle assembly 3 are made by casting, what's more, they are cast as one piece with housing 17 of side drive 16. The same can be seen on the top view in Fig. 3.

Fig. 2 illustrates, at the same time, the portal distance *P* which is the distance between the longitudinal axis of the differential gear unit arranged in main drive 6 and the longitudinal axis of hub unit 15. This is the distance with which the floor level 2 (Fig. 2) of vehicle 1 can be lower then that of the conventional arrangements.

In Fig. 3, the side drive 16 arranged between main drive 6 and hub unit 15 can be seen. It provides the kinematical connection between the drive elements. On both sides of the centre housing 5, housings 17 of side drives 16 and pads 10 and 12 as well as arms 13 from a compact and integrated unit, namely, these pieces are cast as one piece, in this example. Similarly, centre housing 5 and the housing of main drive 6 are also cast as one piece. The suspension blocks 8 serve the connection of fastener stems with which the position of axle assembly 3 is fixed in respect of the vehicle 1. Beneath suspension blocks 8, mounting pads 18 are arranged for the purpose of arranging the brake cylinders (not shown) of vehicle 1.

In Fig. 3, a cross section 19 of arms 13 is also shown. The cross section 19 is formed as a closed profile to have uniform strength throughout the whole length of arm 13.

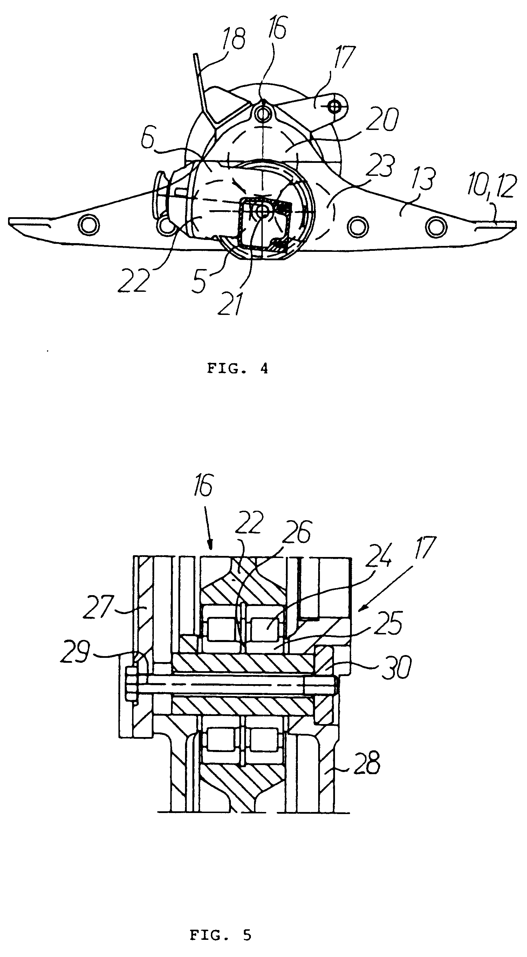

In Fig. 3, the compact arrangement of the axle assembly 3 according to the invention is well illustrated. In this solution, housings 17 of side drives 16, pads 10 and 12, arms 13, centre housing 5 and the housing of main drive 6 as well as the tightly connected suspension blocks 8 and mounting pads 18 form a uniform unit which can be mounted into vehicle 1 without any auxiliary element. In Fig. 4, dashed lines show gears 20 and 21 of side drives 16 as well as transmittal gears 22 and 23 connected to gears 20 and 21.

Fig. 5 illustrates a cross section of side drive 16 in a plane running through the axis of the transmittal gear 22. Transmittal gear 22 runs on two bearings 24, between inner rings 25 of which a distance ring 26 is arranged. Opposite housing walls 27 and 28 of housing 17 of side drive 16 are prestressed against each other by a threaded through-bolt 29 having a threaded disk 30 on its threaded one end. Thus, inner rings 25 of bearings 24, the distance ring 26 between inner rings 25 and side walls 27 and 28 form a pre-stressed system, wherein the stress can be adjusted by the co-operation of bolt 29 and disk 30. This arrangement has the beneficial effect of considerably decreasing the independent deformations of opposite walls 27 and 28 of housing 17 of side drive 16 which results in gears running more accurately within the housing 17. As a matter of course, the same arrangement can be found at transmittal gear 23 as well.

The most important advantage gets apparent in the enlarged strength of the arrangement as described. The shown axle assembly 3 is a compact unit and will be looked upon by the bus producer as one piece. With this, the necessity of separate elements connected to each other by series of threaded connections is eliminated. The construction of uniform strength allows optimal load bearing and load distribution as well as the lowest possible self weight and outer measurements of axle assembly. This and the pre-stressed arrangement as shown in Fig 5 are preferred for smooth operation, increased running accuracy of relatively complicated gear drives used in axle assembly 3, thus, these elements will not be subject to wear and will not cause as much noise as earlier. The suspension arms 13 being cast in one piece with 17 housings of side drives 16 are beneficial for leading away the inconvenient heat produced in the gear drives, this being a quite important advantage when the usually wrong ventilation of axle assemblies in portal arrangement is regarded.

## Claims

1. Driven axle assembly for vehicles having
• a centre housing (5),
• suspension elements (7) connecting the centre housing (5) to the vehicle (1),
• a main drive (6) arranged in the centre housing (5) and including a differential gear unit,
• side drives (16) arranged on outer ends of the centre housing (5),
• wheel hub units (15) connected to the side drives (16), respectively, wherein a portal distance is provided between a middle axis of the differential gear unit arranged in the centre housing (5) and a longitudinal axis of the wheel hub units (15),
***characterized by that***
said suspension elements (7) connecting the centre housing (5) to the vehicle (1) are attached to housings (17) of the side drives (16) in an one-piece manner, whereby housings (17) of the side drives (16), the centre housing (5) and said suspension elements (7) are formed as a compact unit, and the suspension elements (7) include substantially C-formed arms (13) as well as connecting points for attaching the axle assembly (3) to the vehicle (1).

2. Axle assembly as claimed in Claim 1, ***wherein*** said C-formed arms (13) are made of closed profile, and on ends of the arms (13) lying away from the centre housing (5) air spring (9) pads (10) and shock-absorber (11) pads (12) are arranged.

3. Axle assembly as claimed in Claim 2, ***wherein*** the centre housing (5) and a housing of the main drive (6) are made as a one-piece cast element.

## Patentansprüche

1. Angetriebene Achsanordnung für Fahrzeuge mit einem zentralen Gehäuse (5), Aufhängungselementen (7), die das zentrale Gehäuse (5) mit dem Fahrzeug (1) verbinden, einem Hauptantrieb (6), der im zentralen Gehäuse (5) angeordnet ist und eine Differentialgetriebeeinheit aufweist, seitlichen Antrieben (16), die an den äußeren Enden des zentralen Gehäuses (5) angeordnet sind, Radnabeneinheiten (15), die jeweils mit den seitlichen Antrieben (16) verbunden sind, wobei ein Portalabstand zwischen einer Mittelachse der Differentialgetriebeeinheit, die im zentralen Gehäuse (5) angeordnet ist, und einer Längsachse der Radnabeneinheiten (15) vorgesehen ist, **dadurch gekennzeichnet, daß**
die Aufhängungselemente (7), die das zentrale Gehäuse (5) mit dem Fahrzeug (1) verbinden, an Gehäusen (17) der seitlichen Antriebe (16)in einstückiger Weise befestigt sind, daß die Gehäuse (17) der seitlichen Antriebe (16), das zentrale Gehäuse (5) und die Aufhängungselemente (7) als eine kompakte Einheit ausgebildet sind, und daß die Aufhängungselemente (7) im wesentlichen C-förmige Arme (13) ebenso wie Verbindungspunkte zur Befestigung der Achsanordnung (3) am Fahrzeug (1) aufweisen.

2. Achsanordnung nach Anspruch 1,
bei der die C-förmigen Arme (13) aus einem geschlossenen Profil hergestellt sind, und an den Enden der Arme (13), die von dem zentralen Gehäuse (5) entfernt liegen, Luftfedern (9) tragende Dämpfungselemente (10) und Stoßdämpfer (11) tragende Dämpfungselemente (12) angeordnet sind.

3. Achsanordnung nach Anspruch 2,
bei der das zentrale Gehäuse (5) und ein Gehäuse des Hauptantriebs (6) als einstückiges Gußelement ausgebildet sind.

## Revendications

1. Ensemble d'essieu mené pour véhicules, comprenant :
- un carter central (5),
- des organes de suspension (7) couplant le carter central (5) au véhicule (1),
- un dispositif d'entraînement principal (6) placé dans le carter central (5) et comprenant un train d'engrenage différentiel,
- des dispositifs d'entraînement latéraux (16) placés sur les extrémités extérieures du carter central (5),
- des ensembles de moyeu de roue (15) respectivement couplés aux dispositifs d'entraînement latéraux (16), dans lequel il existe une distance de portée entre l'axe médian du train d'engrenage différentiel placé dans le carter central (5) et l'axe longitudinal des ensembles de moyeu de roue (15),
caractérisé en ce que lesdits organes de suspension (7) couplant le carter central (5) au véhicule (1) sont fixés d'une seule pièce aux carters (17) des dispositifs d'entraînement latéraux (16), si bien que les carters (17) des dispositifs d'entraînement latéraux (16), le carter central (5) et lesdits organes de suspension (7) constituent une unité compacte, et les organes de suspension (7) contiennent des bras (13) sensiblement en forme de C ainsi que des points d'accouplement servant à fixer l'ensemble d'essieu (3) au véhicule (1).

2. Ensemble d'essieu selon la revendication 1, dans lequel lesdits bras (13) en forme de C sont faits d'un profilé fermé et, sur les extrémités des bras (13) situées loin du carter central (5) sont placés des patins (10) de ressorts pneumatiques (9) et des patins (12) d'amortisseurs (11).

3. Ensemble d'essieu selon la revendication 2, dans lequel le carter central (5) et un carter du dispositif d'entraînement principal (6) sont faits d'une pièce coulée monobloc.
